Europäisches Patentamt

(19) European Patent Office　　　(11) Publication number: **0 041 806**

Office européen des brevets　　　　　　　　　　　　　　　　　　**B1**

⑫　　**EUROPEAN PATENT SPECIFICATION**

(45) Date of publication of patent specification: **19.09.84**　　(51) Int. Cl.³: **F 16 B 7/00**

(21) Application number: **81302392.6**

(22) Date of filing: **01.06.81**

(54) **Clip for securing around a member such as a pipe.**

(30) Priority: **05.06.80 GB 8018469**
**06.01.81 GB 8100256**

(43) Date of publication of application:
**16.12.81 Bulletin 81/50**

(45) Publication of the grant of the patent:
**19.09.84 Bulletin 84/38**

(84) Designated Contracting States:
**AT BE CH DE FR IT LI NL SE**

(56) References cited:
**DE-A-1 586 690**
**FR-A-2 280 821**
**US-A-1 992 505**
**US-A-2 452 186**

(73) Proprietor: **Huxtable, Peter John**
**"Merritts"**
**Great Witley Worcestershire (GB)**

(72) Inventor: **Huxtable, Peter John**
**"Merritts"**
**Great Witley Worcestershire (GB)**

(74) Representative: **Lomas, Geoffrey Michael et al**
**BARKER, BRETTELL & DUNCAN 138 Hagley**
**Road Edgbaston**
**Birmingham B16 9PW (GB)**

Courier Press, Leamington Spa, England.

# Description

This invention relates to a clip for securing around a member, such as a pipe. The member need not be of circular cross-section.

I have proposed a clip in which a moulded plastics guide body is provided with passages of Y-configuration to receive opposite ends of a plastics strap and guide the ends together into the bore of a nut mounted on the guide body. The strap was of half-cylindrical shape throughout its length, and its curved surface was formed with 'half-threads' such that, when the end portions were brought into back-to-back engagement by the guide body passages to enter the nut, the 'half-threads' of the two end portions combined to form complete threads which are threadedly engageable by the complementary internal threads of the nut. Such a construction was found to have certain disadvantages.

A plastics clip construction has been proposed in DE—A—1 586 690. In one construction the ends of a strap of half-round cross-section are brought into back-to-back engagement in a nut, but the strap ends are kinked as they enter the nut since no means is provided for guiding the strap ends into the bore of the nut. In a second construction a strap of substantially rectangular cross-section has one end integral with a peg on which a nut is mounted, the peg being provided with a slot to receive the other end of the strap which is provided with threads for engagement by the nut. However, the strap enters the slot in an axial direction and will accordingly be susceptible to kinking where it enters the slot.

US—A—2 452 186 apparently shows a metal construction in which a strap has opposite ends meshed with a nut, the nut being located on a peg which is supported on a saddle engaging a tube being clamped. The entrance to the bore of the nut is counterbored to provide a degree of control of the shape of the strap where it enters the nut, but the saddle does not control the bending of the strap.

According to the invention a clip for securing around a member comprises a flexible strap of substantially flat cross-section for encircling the member, opposite end portions of the strap being formed on one side thereof with external screw thread portions, a nut having a bore provided with internal screw threads of complementary form to the external screw thread portions, a body having a support portion on which the nut is supported and a base engageable with the member and an integral guide peg directed away from the base, the guide peg being positioned within the bore of the nut in abutment with both strap end portions to retain the external screw thread portions meshed with the internal screw threads, characterised in that the strap is a plastics strap, the body is of plastics, the support has a disc surface and is provided with a pair of openings positioned at the base of the peg on opposite sides thereof, and a pair of arcuate guide passages extend through the body to terminate in the respective openings for guiding the opposite ends of the strap in position in the nut on opposite sides of the peg, such that on rotation of the nut in the appropriate direction both strap end portions are drawn through the body and the nut to tighten the strap around the member.

With such a clip it is possible to achieve a more positive engagement between the thread portions on the strap and the threads of the nut that is often achieved in clips of the kind which employ a worm engaging with rack teeth provided on a strap end portion.

The base of the body which engages with the member may be suitably shaped to cooperate therewith, and preferably it is of concave part-cylindrical shape to cooperate with a cylindrical member.

The body is preferably formed by moulding.

The strap is preferably of constant cross-section throughout its length, apart from the provision of threads, and the threads are provided uniformly along the strap. This enables the strap to be cut to length to suit the particular application.

However, when only the end portions of the strap are formed with threads the intermediate portion of the strap may comprise means for adjusting the length of the strap, such as a buckle.

The nut may be of any convenient form. It may be provided with flats for engagement by a spanner and/or it may be provided with finger-engageable formations to enable the nut to be turned by hand without the use of a tool.

The guide body is preferably provided with a pair of slits adjacent to the base to facilitate deformation of the base to conform to members of different diameters.

The invention will now be further described, by way of example only, with reference to the accompanying drawings in which:—

*Figure 1* is a side elevation of a clip in accordance with the invention shown in an assembled condition;

*Figure 2* is a side elevation of the guide body of the clip of Figure 1, the independent guide passages being indicated in dotted outline;

*Figure 3* is a view of the guide body looking from the right in Figure 2;

*Figure 4* is a plan view of the guide body of Figure 2;

*Figure 5* is a plan view of the nut of the clip of Figure 1; and

*Figures 6, 7 and 8* are three views on a larger scale of a portion of the strap of the clip of Figure 1; Figure 6 being a plan view, Figure 7 being an end view, and Figure 8 being a side view.

The illustrated clip may be used, for example, to clamp together two circularly cylindrical pipes, the end of one pipe being received within the end of the other pipe on which the clip is mounted with the strap 1 substantially encircling the pipe ends.

I had previously proposed to employ a plastics strap of half-round section in a related clip construction, but in accordance with the invention, in order to make the strap more flexible, the strap 1 of the illustrated clip is of flatter cross-section than such a strap of half-round section.

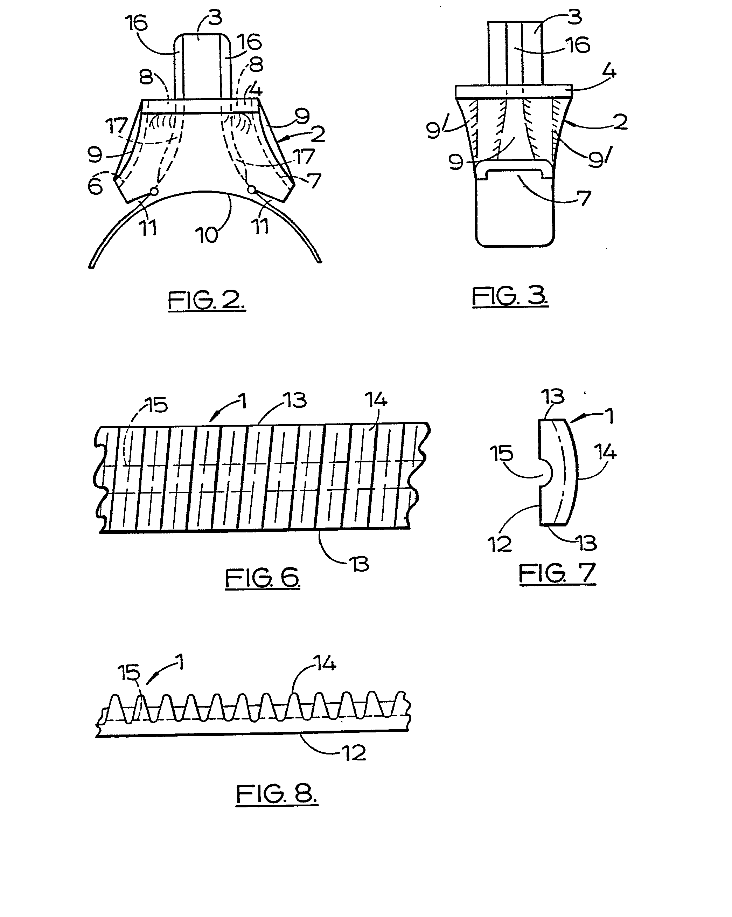

With reference to Figures 2 and 3, the clip comprises a moulded plastics guide body 2 provided with an integral peg 3 which projects above an abutment disc 4 on which is supported in use a nut 5. The height of peg 3 is equal to the thickness of nut 5 so that its top is flush with the assembled nut. The guide body 2 is provided with two arcuate passages 6 and 7 which do not merge with each other, the open upper ends 8 of the passages being disposed on opposite sides of the base of the peg 3. The passages 6, 7 are of substantially oblong rectangular cross-section.

Various constructions and shapes of nuts could be employed, of metal or moulded plastics. The illustrated nut 5 is provided with finger-engageable projections 5', Figure 5.

Guide body 2 is stiffened by the provision of integral external webs 9, 9'. Guide body 2 is formed with a base 10 which extends between the free ends of the passages 6, 7 and is concave outwards, to fit the outer surface of a pipe. Deformation of the base to conform to pipes of different diameters is facilitated by slits 11 formed in the opposed side walls of the body 2.

As shown in Figures 6 to 8, the moulded plastics flexible strap 1 has a flat rear face 12, flat side faces 13, and an arcuate, convex outwards, front face 14. The front face 14 is formed with thread portions which are complementary to the internal threads of the nut 5 to mesh therewith. The rear face 12 is provided with a longitudinal slot 15 of half-round cross-section and of complementary shape to opposed ribs 16 provided on the peg 3. The ribs 16 on peg 3 are contiguous with respective ribs 17 provided on the walls of passages 6, 7 for most of their length. The width of the strap between opposite side faces 13 is slightly less than the width of passages 6, 7 between the cooperating faces 18 shown in Figure 4.

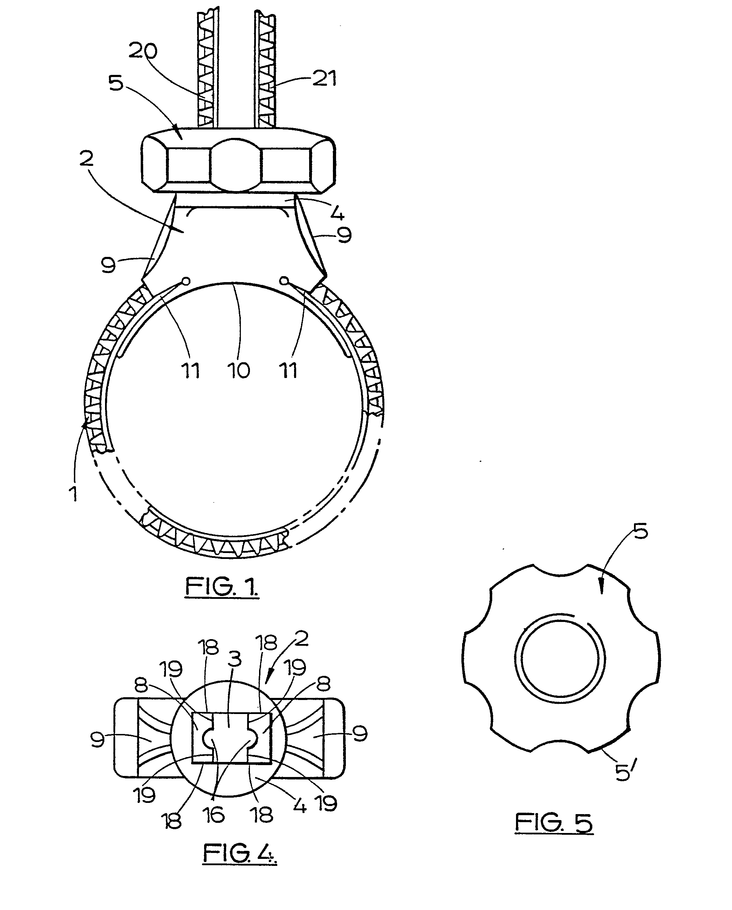

The clip is shown assembled in Figure 1, the rear faces 12 of strap end portions 20, 21 facing each other. It will be appreciated that in the assembled clip the peg 3 extends within the nut 5 to hold the portions of the strap 1 that are within the nut in threaded engagement with the nut threads, and that the straps are held against twisting by cooperation between flats 19 on the peg and the rear face 12 of the strap, and by cooperation between ribs 16, 17 and the slot 15.

With the nut meshed with both strap end portions 20, 21, rotation of nut 5 in the appropriate direction results in opposite ends of the strap 1 being drawn through the nut, the opposite ends being slidably guided towards the bore of nut 5 by the respective guide passages 6, 7. The strap 1 is thereby tightened around a member on which the clip is mounted.

In a modification, not shown, of the illustrated clip the strap is of identical cross-section to that of Figure 7 except that recess 15 is omitted, ribs 16 and 17 are omitted, and the cross-section of passages 6, 7 throughout their length is the same as that of the strap (with a sufficient clearance to permit sliding of the strap). Thus the openings 8 are of complementary cross-section to that of the strap. In addition, in order to improve the strength of the guide body 2 to resist the forces produced by the curved portions of the straps within passages 6, 7, the recesses in the body between the webs 9, 9' are omitted so that the outer surface of the body corresponds to an envelope which just includes the previously described webs.

Instead of wrapping the band once only around a member, for extra security and/or for dealing with small members, the band may be taken one or more further turns around the member before reinsertion through the guide body.

For members which are too large to be encircled by a strap of a particular length, it would be possible to use two or more clips in combination, the strap of one clip meshing with the nut of a second clip, and the strap of the second clip meshing with the nut of the first clip, or with the nut of a third clip as the case may be.

## Claims

1. A clip for securing around a member comprising a flexible strap (1) of substantially flat cross-section for encircling the member, opposite end portions (20, 21) of the strap being formed on one side (14) thereof with external screw thread portions, a nut (5) having a bore provided with internal screw threads of complementary form to the external screw thread portions, a body (2) having a support portion (4) on which the nut is supported and a base (10) engageable with the member and an integral guide peg (3) directed away from the base, the guide peg being positioned within the bore of the nut in abutment with both strap end portions to retain the external screw thread portions meshed with the internal screw threads, characterised in that the strap is a plastics strap, the body is of plastics, the support portion has a disc surface and is provided with a pair of openings (8) positioned at the base of the peg on opposite sides thereof, and a pair of arcuate guide passages (6, 7) extend through the body to terminate in the respective openings for guiding the opposite ends of the strap into position in the nut on opposite sides of the peg, such that on rotation of the nut in the appropriate direction both strap end portions are drawn through the body and the nut to tighten the strap around the member.

2. A clip as claimed in claim 1 in which the strap is of constant cross-section throughout its length, apart from the provision of threads, and the threads are provided uniformly around the strap.

3. A clip as claimed in claim 1 or claim 2 in which the body is provided with a pair of slits (11) adjacent to the base (10) to facilitate deformation of the base to conform to members of different diameters.

4. A clip as claimed in any of the preceding claims in which the nut is provided with finger-engageable projections.

**Patentansprüche**

1. Schelle, welche um einen Gegenstand herum festlegbar ist, mit einem flexiblen, einen im wesentlichen flachen Querschnitt aufweisenden, zum Umgreifen des Gegenstandes dienenden Streifen, dessen beide Endteile (20, 21) auf einer Seite (14) angeformte äußere Gewindeteile aufweisen, mit einer Mutter (5), die ein zu den Gewindeteilen komplementäres Innengewinde aufweist, mit eine, Körper (2), der einen Abstützteil (4), auf welchem sich die Mutter abstützt, einen an dem Gegenstand zur Anlage bringbaren Unterteil (10) und einen von dem Unterteil hinweggerichteten einstückigen Führungszapfen (3) umfaßt, der innerhalb der Bohrung der Mutter unter Anlage an beiden Endteilen des Streifens angeordnet ist, um die äußeren Gewindeteile in Eingriff mit dem Innengewinde zu halten, dadurch gekennzeichnet, daß der Streifen und der Körper aus Kunststoff bestehen, daß der Abstützteil eine scheibenförmige Oberfläche und zwei an der Wurzel des Führungszapfens zu beiden Seiten desselben vorgesehene Öffnungen (8) aufweist und daß sich zwei gebogene Führungskanäle (6, 7) durch den Körper erstrecken und in den jeweiligen Öffnungen münden, die die beiden Enden des Streifens in ihre Position in der Mutter zu beiden Seiten des Zapfens geleiten, so daß bei Drehung der Mutter in der entsprechenden Richtung beide Endteile des Streifens durch den Körper und die Mutter hindurchgezogen werden, um dem Streifen um den Gegenstand herum festzuziehen.

2. Schelle nach Anspruch 1, dadurch gekennzeichnet, daß die Streifen, von den Gewindeteilen abgesehen, einen über seine ganze Länge gleichbleibenden Querschnitt aufweist und die Gewinde gleichmäßig über die Länge des Streifens vorgesehen sind.

3. Schelle nach Anspruch 1 oder 2, bei welcher der Körper an dem Unterteil (10) mit zwei Schlitzen (11) versehen ist, um die Verformung des Grundteils zwecks Anpassung an Gegenstände unterschiedlicher Durchmesser zu erleichtern.

4. Schelle nach einem der vorangehenden Ansprüche, dadurch gekennzeichnet, daß die Mutter mit Vorsprüngen für den Fingerangriff versehen ist.

**Revendications**

1. Un collier de serrage pour fixer autour d'un élément comprenant une bride souple (1) de section droite à peu près transversale pour encercler l'élément, des parties d'extrémités opposées (20, 21) de la bride étant formées sur un côté (14) avec des parties filetées externes, un écrou (5) ayant un alésage pourvu d'un filetage interne de forme complémentaire des parties filetées externes, un corps (2) ayant une partie de support (4) sur laquelle l'écrou est supportée et une base (10) pouvant venir en contact avec l'élément et un téton de guidage (3) venu de matière dirigé en s'écartant de la base, le doigt de guidage étant positionné dans l'alésage de l'écrou en butée avec les deux parties d'extrémité de la bride pour retenir les parties filetées extérieurement engrenées avec les filetages internes, caractérisée en ce que la bride est une bande en matière plastique, le corps est en matière plastique, la partie de support présente une surface de disque et est pourvue d'une paire d'ouvertures (8) positionnées à la base du téton sur les côtés opposés de celui-ci, et une paire de passages incurvés de guidage (6, 7) s'étendent à travers le corps de façon à se terminer dans les ouvertures respectives afin de guider les extrémités opposées de la bride en position dans l'écrou sur les côtés opposées du téton, de manière qu'à la suite de la rotation de l'écrou dans le sens approprié les deux parties d'extrémité de la bride soient tirées à travers le corps et l'écrou pour serrer la bride autour de l'élément.

2. Un collier tel que revendiqué suivant la revendication 1, dans lequel la bride présente une section droite constante sur toute sa longueur, mis à part les filets prévus, et les filets sont formés uniformément le long de la bride.

3. Un collier tel que revendiqué suivant la revendication 1 ou la revendication 2, dans lequel le corps est pourvu d'une paire de fentes (11) adjacentes à la base (10) pour faciliter la déformation de la base pour se conformer à des éléments de différents diamètres.

4. Un collier tel que revendiqué dans l'une quelconque des revendications précédentes, dans lequel l'écrou est pourvu de saillies pouvant coopérer avec des doigts.

FIG. 1.

FIG. 4.

FIG. 5

1

FIG. 2.

FIG. 3.

FIG. 6

FIG. 7

FIG. 8.